# EUROPÄISCHE PATENTANMELDUNG

(11) **EP 1 221 407 A1**
(43) Veröffentlichungstag der Anmeldung: **10.07.2002**
(21) Anmeldenummer: 01100244.1
(22) Anmeldetag: 03.01.2001
(51) Int. Cl.: B62J 15/02

(54) **Sicherheits-Rasteinrichtung für Fahrradschutzbleche**

(71) Anmelder: Huang, Kuei C., Ban-Chiau City, Taipei Hsien (TW)
(72) Erfinder: Huang, Kuei C., Ban-Chiau City, Taipei Hsien (TW)
(74) Vertreter: Simons, Johannes, Dipl.-Ing.

(57) **Zusammenfassung**

Sicherheits-Rasteinrichtung eines Fahrradschutzblechs, dessen Strebe mittels einer Befestigungseinrichtung (5) an der Radachse befestigt ist, während sich deren anderes Ende neben dem Rad erstreckt und mittels einer Rasteinrichtung (1) mit dem Schutzblech (3) verbunden ist, wobei die Rasteinrichtung (1) an einer Seite mit einer Rastnut (14) versehen ist, in die das Schutzblech (3) einrastbar ist, während die Rasteinrichtung (1) an der anderen Seite mit einer Einstecknut (12) versehen ist, die seitlich einen Rastvorsprung (11) aufweist, der an der Innenseite neben dem Öffnungsende der Einstecknut (12) eine Schrägführung (111) besitzt, an deren Ende eine abgerundete Kante (112) angeordnet ist, und wobei die Strebe (2) an der Verbindungsstelle mit der Rasteinrichtung (1) als Einhak-Öse (21) ausgebildet ist, die durch die Führung der Schrägführung (111) leicht in die Einstecknut (12) einsteckbar ist und an den Rastvorsprung (11) zur Befestigung angehakt ist, während die Verbindung der Rasteinrichtung (1) mit der Strebe (2) und dem Schutzblech (3) bei geeigneter Außenkraft leicht mittels der Führung der abgerundeten Kante 112 gebrochen ist, und wobei sich das Strebenende neben dem Reifen des Rads erstreckt, wenn die Strebe (2) von Fremdkörpern weggezogen ist und von der Rasteinrichtung (1) abgetrennt ist, sodass die Strebe (2) nicht in die Felge des Rads eintritt, das Rad zu blockieren, wodurch die Gefahren zu vermeiden sind.

## Beschreibung

Die vorliegende Erfindung betrifft eine Sicherheits-Rasteinrichtung für Fahrradschutzbleche, insbesondere eine Rasteinrichtung, die mit dem Schutzblech effektiv verbindbar ist, wobei die Streben von dem Schutzblech zur Vermeidung vom Hinfallen des Fahrrads trennbar sind, wenn das Schutzblech von Fremdkörper kräftig weggezogen wird.

Das Fahrrad ist manuell angetrieben, sodass es als Sportmittel dienen kann, und außerdem ist es leicht und praktisch, wodurch es verbreitet in aller Welt als Verkehrsmittel oder Sportmittel benutzt ist, insbesondere in westlichen modernen Ländern, wo das Radfahren ein sehr üblicher Sport ist. Wenn das Fahrrad oft beim Turnier auf Straßen mit schlechtem Zustand wie z.B. auf Waldstraßen oder Steinstraßen fährt, ist die Sicherheit besonders wichtig. Daher spielt die Sicherheitsgestaltung des Fahrrads außer der Geschicklichkeit des Radfahrers eine bedeutende Rolle, sonst kann der Radfahrer bei unzureichender Sicherheitsgestaltung des Fahrrads die ausgezeichnete Geschicklichkeit schlecht ausüben.

Im Vergleich zu anderen Bauteilen des Fahrrads ist das Schutzblech einfach in Konfiguration, trotzdem ist es durch das Schutzblech davor zu schützen, dass die kleine Steine und Schmutz von Rädern hinauf mitgeführt werden. Daher ist es ein notwendiger Bauteil, besonders für das Radfahren auf dem schlechten Straßenzustand. Bei der herkömmlichen Blechschutzanordnung ist das Schutzblech durch eine Vielzahl von Streben an einer bestimmten Stelle des Fahrradrahmens befestigt. Obwohl es eine ausgezeichnete Fixierwirkung aufweist, aber wenn das Fahrrad auf der Waldstraßen fährt, wird das Blechschutz sehr leicht von den quer blockierenden Gegenstände wie z.B. Ästen gezogen, wodurch das Radfahren erheblich beeinflusst ist und sogar das Fahrrad leicht hinfällt.

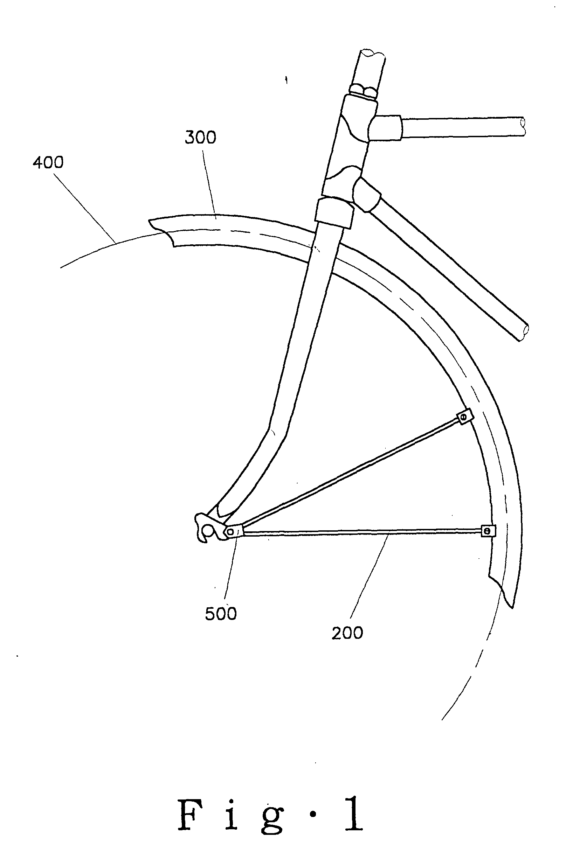

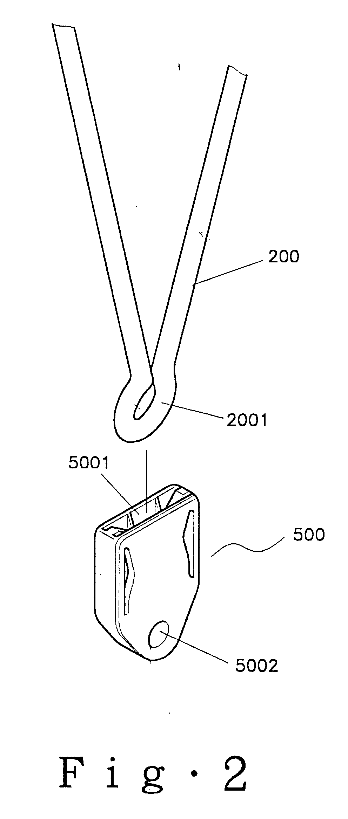

Eine in den Fig. 1 und 2 gezeigte herkömmliche Rasteinrichtung ist mit Hilfe einer Befestigungsbohrung 5002 an der Radachse des Fahrrads befestigt, wobei die Rasteinrichtung 500 oben eine Einstecköffnung 5001 aufweist. Eine Vielzahl von Streben 200 sind mit einem Schutzblech 300 verbunden, um es zu stützen. Die Strebe 200 ist unten als Schlaufe 2001 ausgebildet, die in die Einstecköffnung 5001 der Rasteinrichtung 500 zur Herstellung einer lösbaren Verbindung einführbar ist, wodurch das Schutzblech 300 positioniert ist, während die Schlaufe 2001 der Streben 200 von der Einstecköffnung 5001 der Rasteinrichtung 500 abgetrennt ist, wenn die Strebe 200 von sich quer erstreckenden Gegenständen bei Radfahren weggezogen ist. Daher sind die Gefahren wegen der Blockierung zu vermeiden.

Trotzdem befindet sich die Strebe 53 in freiem Zustand, wenn die sich die Schlaufe 2001 von der Einstecköffnung 5001 der Rasteinrichtung 500 ablöst. Wenn die Strebe 200 aufgrund eines starken Stoß oder Schwung in das Rad 400 eingesteckt wird, wird das Rad 400 blockiert, wodurch ein noch schlimmeres Hinfallen verursacht werden kann.

Von daher ist es Aufgabe der Erfindung, diese Mängel zu beseitigen und eine Sicherheits-Rasteinrichtung für Fahrradschutzbleche zu entwickeln, bei dem ein Ende von Streben mittels einer Befestigungseinrichtung an der Radachse befestigt ist, während sich deren anderes Ende neben dem Rad erstreckt und mittels einer Rasteinrichtung mit dem Schutzblech verbunden ist. Die Verbindung der Rasteinrichtung mit der Strebe und dem Schutzblech ist bei geeigneter Außenkraft leicht mittels der Führung der abgerundeten Kante gebrochen, wobei sich das Strebenende neben dem Reifen des Rads erstreckt, wenn die Strebe von Fremdkörpern weggezogen ist und von der Rasteinrichtung abgetrennt ist, sodass die Strebe nicht in die Felge des Rads eintritt, das Rad zu blockieren, wodurch Gefahren zu vermeiden sind.

Eine weitere Aufgabe der vorliegenden Erfindung besteht darin, eine Sicherheits-Rasteinrichtung eines Fahrradschutzblechs zu schaffen, die an einer Seite eine Einstecknut aufweist, deren Seitenwand leer ausgehöhlt ist und als Rastvorsprung und Anschlag ausgebildet ist, wobei sich der Rastvorsprung in Richtung auf die Einstecknut erstreckt und als Schrägführung ausgebildet ist, die an der anderen Seite der Einstecköffnung mit einer abgerundeten Kante versehen ist, und wobei die Strebe an der Verbindungsstelle mit der Rasteinrichtung als Einhak-Öse ausgebildet ist, die durch die Führung der Schrägführung leicht in die Einstecknut einsteckbar ist und an den Rastvorsprung zur Befestigung angehakt ist, während die Verbindung der Rasteinrichtung mit der Strebe bei ungewöhnlicher Außenkraft leicht mittels der Führung der abgerundeten Kante gebrochen ist, sodass eine einfache Zusammensetzung und eine Schutzwirkung erreicht sind.

Eine weitere Aufgabe der vorliegenden Erfindung besteht darin, eine Sicherheits-Rasteinrichtung eines Fahrradschutzblechs zu schaffen, die an einer anderen Seite mit einer Rastnut versehen ist, in die ein am Rand des Schutzblechs angeordneter Bogenvorsprung zur lösbaren Verbindung einführbar ist. Alternativ kann die Rasteinrichtung eine obere Einstecknut und einen Rastvorsprung aufweisen, wobei die Einhak-Öse der am Schutzblech angebrachten Verlängerungsstreben in die obere Einstecknut eingesteckt ist. Außerdem kann sich eine Expansionsstecköffnung seitlich der oberen Einstecknut erstrecken, wodurch die Verbindungsleiste in die Expansionsstecköffnung einführbar ist. Daher sind der Anwendungsbereich und die Verbindungsmöglichkeit erweitert.

Eine weitere Aufgabe der vorliegenden Erfindung besteht darin, eine Sicherheits-Rasteinrichtung eines Fahrradschutzblechs zu schaffen, wobei eine Befestigungseinrichtung vorgesehen ist, um die Befestigungsstelle der Strebe einzustellen, sodass die Streben unterschiedlicher Länge den Rädern unterschiedlichen Durchmessers passen.

Nachfolgend wird die Erfindung anhand der Zeichnung beispielhaft erläutert. Es zeigen:
- Fig. 1: den Vorderbau eines Fahrrads mit einem herkömmlichen gehalterten Fahrradschutzblech in einer Seitenansicht;
- Fig. 2: die Rasteinrichtung und das Strebenende der Schutzblechanordnung nach Fig. 1, in einer vergrößerten perspektivischen Darstellung;
- Fig. 3: eine perspektivische Gesamtansicht einer ersten Ausführungsform der erfindungsgemäßen Rasteinrichtung im Zusammensetzungszustand mit dem Schutzblech und der Strebe;
- Fig. 4: eine perspektivische Gesamtansicht der ersten Ausführungsform der erfindungsgemäßen Rasteinrichtung im Trennungszustand von dem Schutzblech und der Strebe;
- Fig. 5A: eine Schnittansicht der ersten Ausführungsform der erfindungsgemäßen Rasteinrichtung vor dem Einrasten der Strebe darin;
- Fig. 5B: eine Schnittansicht der ersten Ausführungsform der erfindungsgemäßen Rasteinrichtung bei dem Einrasten der Strebe darin;
- Fig. 5C: eine Schnittansicht der ersten Ausführungsform der erfindungsgemäßen Rasteinrichtung im Zusammensetzungszustand mit dem Schutzblech und der Strebe;
- Fig. 6: eine Explosionsansicht einer erfindungsgemäßen Befestigungseinrichtung;
- Fig. 7: eine Schnittansicht einer zweiten Ausführungsform der erfindungsgemäßen Rasteinrichtung im Zusammensetzungszustand mit dem Schutzblech und der Strebe;
- Fig. 8: eine perspektivische Gesamtansicht einer dritten Ausführungsform der erfindungsgemäßen Rasteinrichtung im Zusammensetzungszustand mit dem Schutzblech und der Strebe;
- Fig. 8A: eine Schnittansicht der dritten Ausführungsform der erfindungsgemäßen Rasteinrichtung im Zusammensetzungszustand mit dem Schutzblech und der Strebe;
- Fig. 9: eine perspektivische Gesamtansicht der dritten Ausführungsform der erfindungsgemäßen Rasteinrichtung im Trennungszustand von dem Schutzblech und der Strebe;
- Fig. 9A: eine perspektivische Gesamtansicht der vierten Ausführungsform der erfindungsgemäßen Rasteinrichtung im Trennungszustand von dem Schutzblech und der Strebe;
- Fig. 10: eine perspektivische Schnittansicht einer fünften Ausführungsform der erfindungsgemäßen Rasteinrichtung; und
- Fig. 10A: eine Schnittansicht der fünften Ausführungsform der erfindungsgemäßen Rasteinrichtung im Zusammensetzungszustand mit dem Schutzblech und der Strebe.

In den Figuren 1 und 2 ist eine herkömmliche Rasteinrichtung des Fahrradschutzblechs dargestellt. Wie ihre Anordnung und ihre Nachteile vorhin beschrieben sind, werden sie hier nicht mehr wiederholt erläutert.

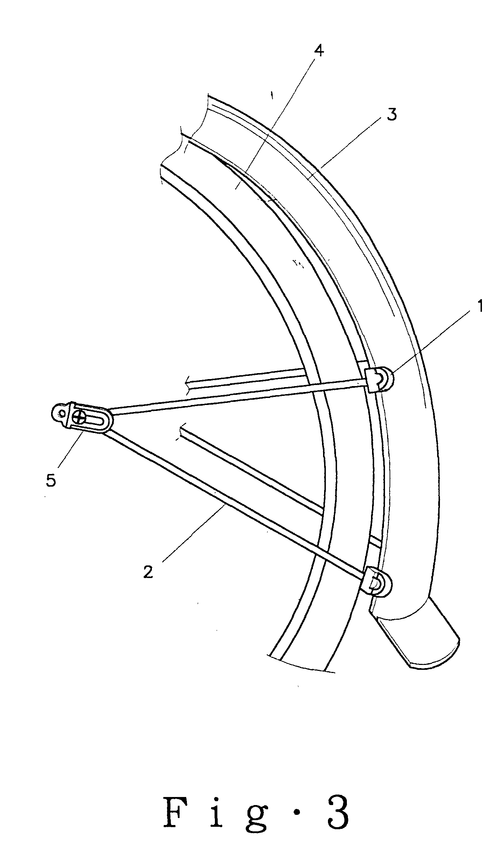

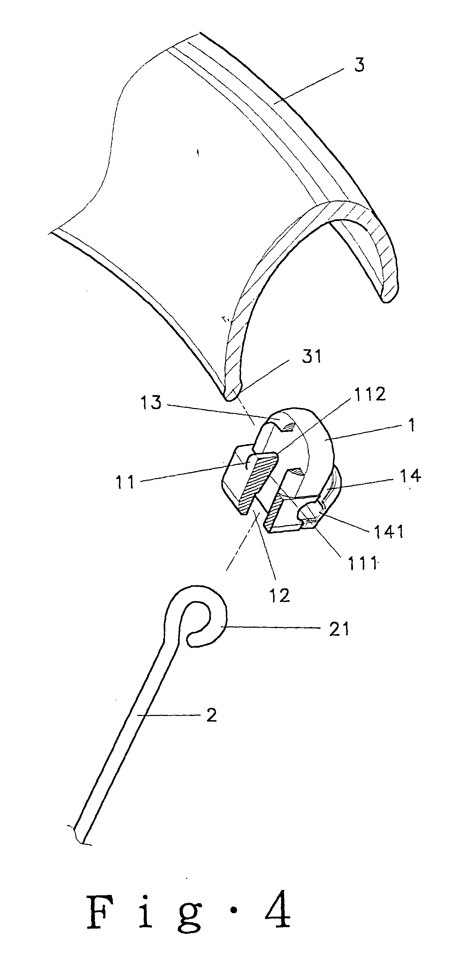

Bezugnehmend auf die Fig. 3 und 4 besteht die vorliegende Erfindung aus einer Rasteinrichtung 1, einer Strebe 2 und einem Schutzblech 3. Die Rasteinrichtung 1 weist an einer Seite eine Einstecknut 12 auf, deren Seitenwand leer ausgehöhlt ist und als Rastvorsprung 11 und Anschlag 13 ausgebildet ist, wobei sich der Rastvorsprung 11 in Richtung auf die Einstecknut 12 erstreckt und als Schrägführung 111 ausgebildet ist, die an der anderen Seite der Einstecköffnung mit einer abgerundeten Kante 112 versehen ist. Die Rasteinrichtung 1 weist an der anderen Seite eine Rastnut 14 auf, die in Schnittform dem Schutzblech 3 entspricht und unten eine gebogene Vertiefung 141 besitzt. Die Strebe 2 ist V-förmig ausgebildet, wobei sie an ihrem spitz zulaufenden Ende als U-Teil 22 sowie an ihren Entfaltungsenden als Einhak-Öse 21 ausgebildet. Das Schutzblech 3 weist an seinen jeweiligen Enden einen Bogenvorsprung 31 auf.

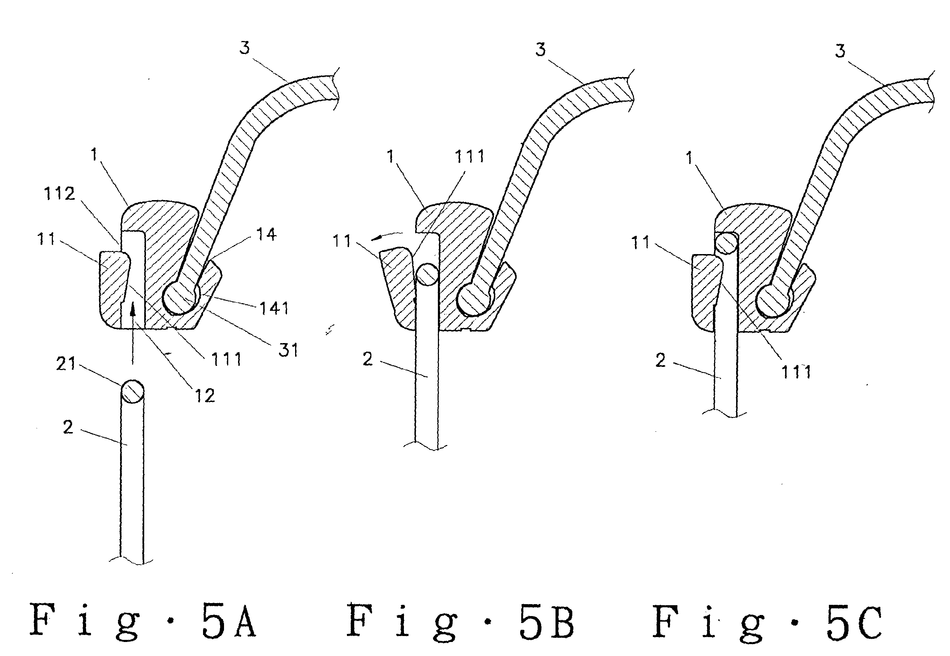

Die in den Fig. 5A, 5B und 5C dargestellte Montage der vorliegenden Erfindung geschieht in der Weise, dass das Schutzblech 3 in die Rastnut 14 zur lösbaren Verbindung eingerastet wird, indem sich der Bogenvorsprung 31 des Schutzblechs 3 genau in der gebogenen Vertiefung 141 der Rastnut 14 befindet, während der Bogenvorsprung 31 des Schutzblechs 3 bei einer ausreichenden Zugkraft von der gebogenen Vertiefung 141 der Rastnut 14 trennbar ist, und dass die Einhak-Öse 21 der Strebe 2 in die Einstecknut 12 der Rasteinrichtung 1 eingesteckt ist (siehe Fig. 5A), wobei der Rastvorsprung 11 nach außen gedrückt wird und elastisch verformt ist, wenn die Einhak-Öse 21 die Schrägführung 111 entlang nach oben geschoben wird (siehe Fig. 5B), und dass der Rastvorsprung 11 schließlich zurückgestellt wird, wenn die Einhak-Öse 21 vollständig in die Einstecknut 12 eingesteckt ist und gegen den Anschlag 13 anliegt (siehe Fig. 5C). Wird die Strebe 2 von einer äußeren Kraft weggezogen, wird die Einhak-Öse 21 die abgerundete Kante 112 entlang umgekehrt geglitten, sodass die Strebe 2 von der Rasteinrichtung 1 abgetrennt wird, wobei sich die Entfaltungsenden der Strebe 2 wenigstens bis zur Seite des Rads 4 erstreckt, d.h. die Länge der Strebe 2 darf nicht kürzer als die des Radius des Rads 4, sodass die Strebe 2 nach der Abtrennung der Strebe 2 von der Rasteinrichtung 1 nicht in die Felge des Rads 4 eingesteckt ist und somit die Gefahr der Blockierung des Rads 4 vermieden werden kann.

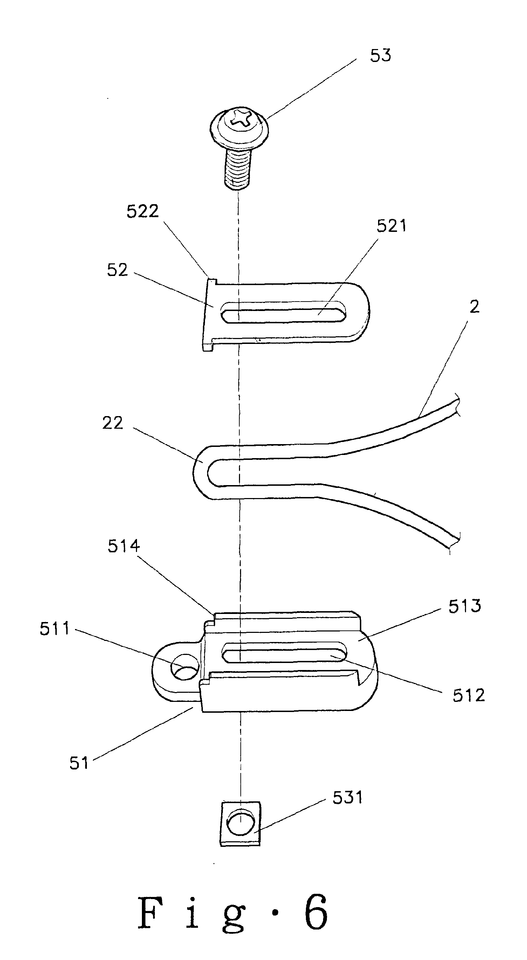

Aus Fig. 6 ist ersichtlich, dass eine Befestigungseinrichtung 5 an der Stelle des U-Teils 22 der Strebe 2 angeordnet ist und aus einem Hauptkörper 51, einem Befestigungsdeckel 52 und einer Positionierschraube 53 besteht. Der Hauptkörper 51 weist eine Befestigungsbohrung 511, einen Justierschlitz 512 und eine Aufnahme 513 auf, wobei der an jeweiligen Seiten der Aufnahme 513 befindliche Vorsprungrand eine vertiefte Kante 514 in der Nähe der Befestigungsbohrung 511 besitzt, und wobei die Aufnahme 513 an ihrer Rückseite mit einer Nut zur Aufnahme einer Unterlegscheibe 531 versehen ist. Die Breite des Befestigungsdeckels 52 paßt genau in der Aufnahme 513, wobei der Befestigungsdeckel 52 einen dem Justierschlitz 512 entsprechenden durchbohrenden Justierschlitz 521 aufweist, und wobei der Befestigungsdeckel 52 an beiden Seiten seines Endes jeweils mit einem Fortsatz 522 versehen ist. Bei Zusammensetzen ist die Befestigungseinrichtung 5 mittels der Befestigungsbohrung 511 an der Radachse befestigt, wobei der U-Teil 22 der Strebe 2 in die Aufnahme 513 eingesteckt wird, woraufhin der Befestigungsdeckel 52 auf den U-Teil 22 derart aufgedeckt wird, dass die Fortsätze 522 gegen die jeweiligen vertieften Kanten 514 zur Befestigung gedrückt werden, woraufhin die Positionierschraube 53 durch die Justierschlitze 521, 512 durchgeht und genau neben dem U-Teil 22 angebracht ist und schließlich in dem Schraubloch der Unterlegscheibe 531 eingedreht wird, wodurch die Strebe 2 mit der Radachse verbunden ist. Der Abstand zwischen dem Strebenende und der Radachse ist einstellbar, indem die Positionierschraube 53 an unterschiedlicher Stelle der Justierschlitze 521, 512 befestigt sein kann. Daher passen die Streben 2 unterschiedlicher Länge den Rädern unterschiedlichen Durchmessers.

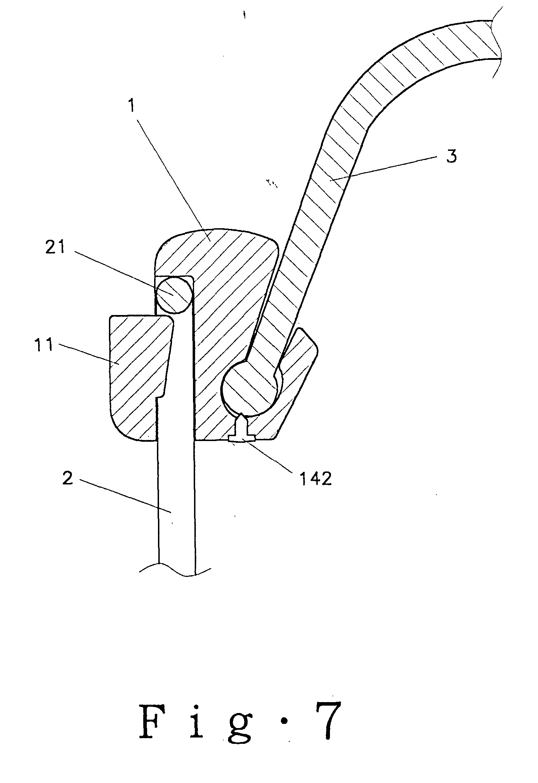

In Fig. 7 ist gezeigt, dass eine Verstärkungsschraube 142 an geeigneter Stelle der Rastnut 14 der Rasteinrichtung 1 derart angeordnet ist, dass die Verstärkungsschraube 142 in den Rand des Schutzblechs 3 eindrehbar ist, wodurch die Verbindung zwischen der Rasteinrichtung 1 und dem Schutzblech 3 verstärkt ist.

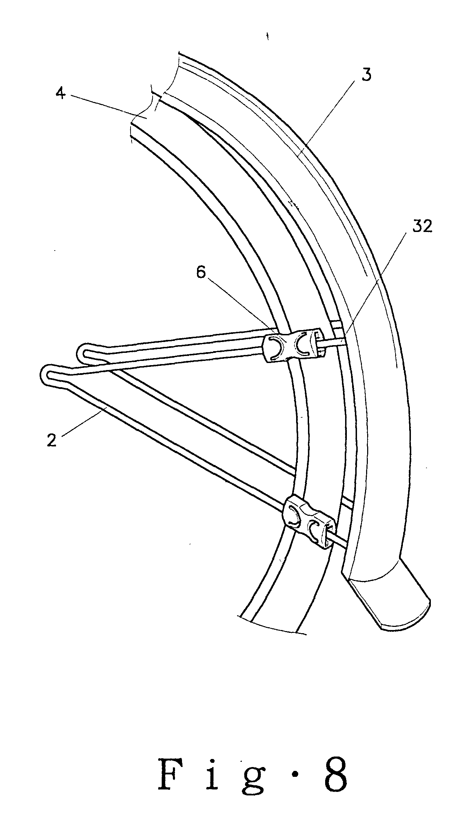

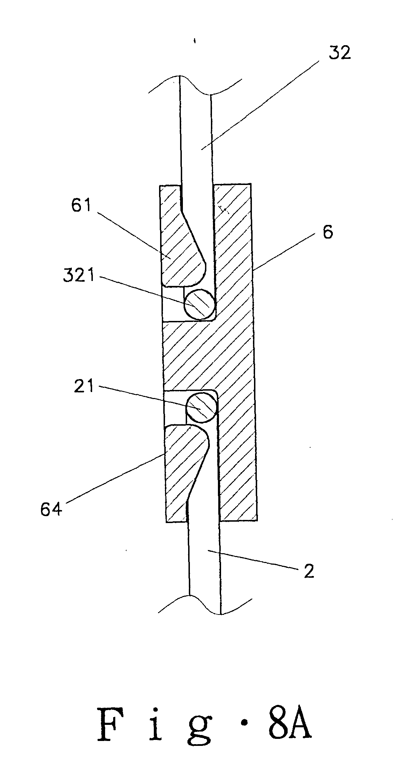

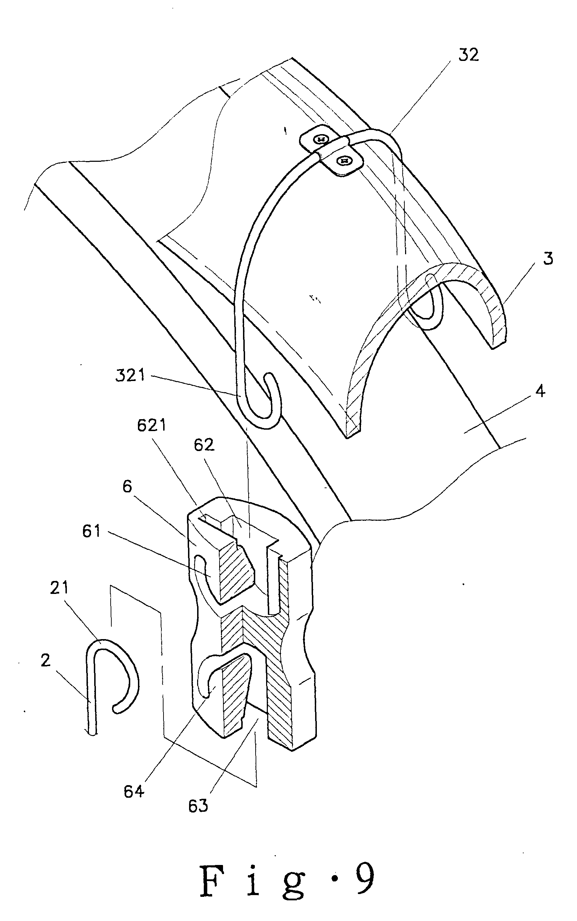

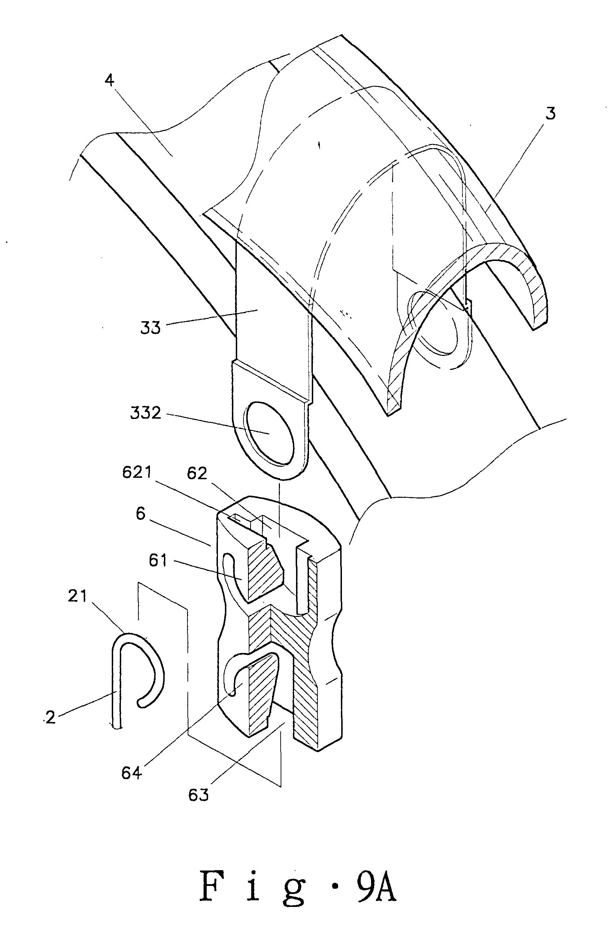

Bezugnehmend auf die Fig. 8A, 9 und 9A weist das Schutzblech 3 an geeigneter Stelle eine Vielzahl von Verlängerungsstreben 32 auf, ohne den obenerwähnten Bogenvorsprung 31 am Rand des Schutzblechs 3 anzubringen, wobei das Ende der Verlängerungsstreben 32 als Einhak-Öse 321 wie die Einhak-Öse 21 am Ende der obenerwähnten Strebe ausgebildet ist. Die Rasteinrichtung 6 wie die Rasteinrichtung 1 weist am unteren Ende eine Einstecknut 63 auf, deren Seitenwand leer ausgehöhlt ist und als Rastvorsprung 64 ausgebildet ist. Der obere Teil der Rasteinrichtung 6 ist symmetrisch mit einer oberen Einstecknut 62 und einem Rastvorsprung 61 versehen, wobei die obere Einstecknut 62 an ihren zwei Seiten jeweils eine Expansionsstecköffnung 621 aufweist. Bei der Zusammensetzung wird die am Ende der Verlängerungsstrebe 32 angeordnete Einhak-Öse 321 in die obere Einstecknut 62 eingesteckt (wie in den Fig. 5A bis 5C dargestellten Schritten) und an den Rastvorsprung 64 angehakt wird, während die am Ende der Strebe 2 angeordnete Einhak-Öse 21 in die obere Einstecknut 63 eingesteckt und an den Rastvorsprung 64 angehakt wird, sodass das Schutzblech 3 und die Strebe 2 miteinander verbunden sind. Daher weist die Ausführungsform eine gleiche Wirkung der obenerwähnten Ausführungsformen auf.

Bezugnehmend auf Fig. 9A ist die in Fig. 9 dargestellte Verlängerungsstrebe 32 durch eine Verbindungsleiste 33 ersetzbar, die am Ende mit einer Verbindungsbohrung 332 versehen ist, wobei die Rasteinrichtung 6 in dieser Ausführungsform der in Fig. 9 dargestellten Rasteinrichtung 6 gleicht. Bei Zusammensetzung wird die Verbindungsleiste 33 in die Expansionsstecköffnung 621 der oberen Einstecknut 62 eingesteckt, während der Rastvorsprung 61 genau in die Verbindungsbohrung 332 eingerastet wird, woraufhin die Einhak-Öse 21 der Strebe 2 in die Einstecknut 63 eingesteckt wird, wodurch eine gleiche Verbindungswirkung der obenerwähnten Ausführungsformen zwischen dem Schutzblech 3 und der Strebe 2 erreicht ist.

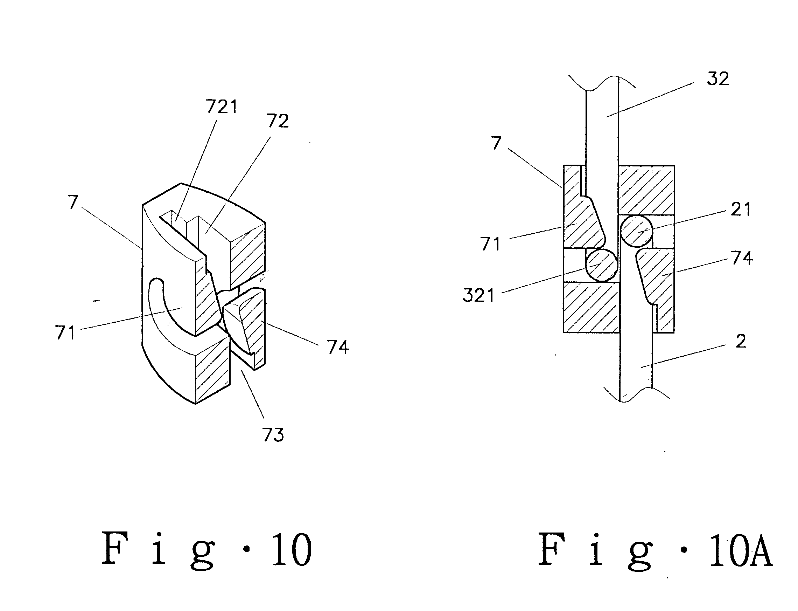

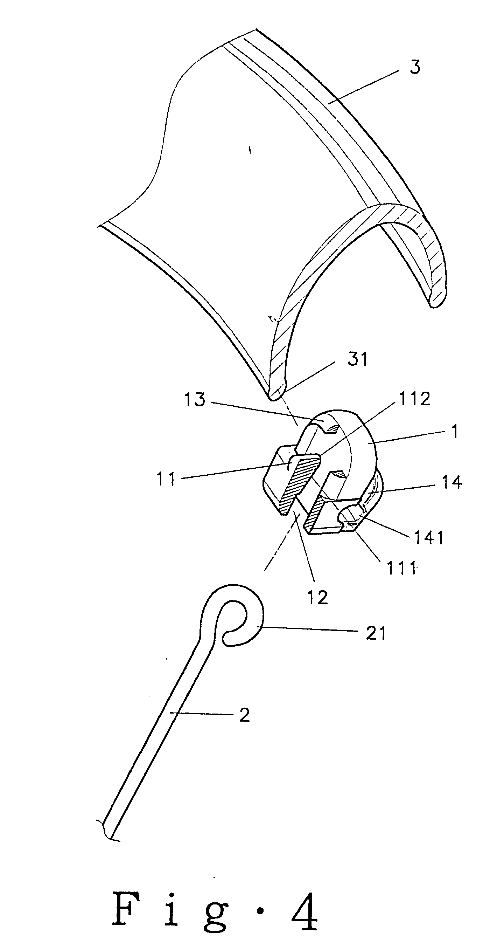

Aus den Fig. 10 und 10A ist ersichtlich, dass die in den Fig. 8, 8A, 9 und 9A dargestellte Rasteinrichtung 6 durch eine in der Fig. 10 dargestellte Rasteinrichtung 7 ersetzbar ist, bei der die obere Einstecknut 72 und die Einstecknut 73 jeweils an entgegengesetzten Seiten angeordnet sind, während die Rastvorsprünge 71, 74 jeweils an den entgegengesetzten Seiten angebracht sind, sodass der Gesamtkörper der Rasteinrichtung 7 erheblich reduziert ist, während eine gleiche Wirkung wie in den Fig. 9 und 9A erreicht ist.

Die Erfindung ist nicht auf die beschriebenen Ausführungsformen beschränkt, vielmehr ergeben sich für den Fachmann im Rahmen der Erfindung vielfältige Abwandlungsund Modifikationsmöglichkeiten. Insbesondere wird der Schutzumfang der Erfindung durch die Ansprüche festgelegt.

## Patentansprüche

1. Sicherheits-Rasteinrichtung für Fahrradschutzbleche, die umfaßt:
eine Rasteinrichtung (1), die an einer Seite eine Einstecknut (12) aufweist, deren Seitenwand leer ausgehöhlt ist und als Rastvorsprung (11) und Anschlag (13) ausgebildet ist, wobei sich der Rastvorsprung (11) in Richtung auf die Einstecknut (12) erstreckt und als Schrägführung (111) ausgebildet ist, die an der anderen Seite der Einstecköffnung mit einer abgerundeten Kante (112) versehen ist, während die Rasteinrichtung (1) an der anderen Seite eine Rastnut (14) aufweist, die in Schnittform dem Schutzblech (3) entspricht und unten eine gebogene Vertiefung (141) besitzt;
eine Strebe (2), die V-förmig ausgebildet ist, wobei sie an ihrem spitz zulaufenden Ende als U-Teil (22) sowie an ihren Entfaltungsenden als Einhak-Öse (21) ausgebildet, deren Stelle den Radius des Rads hinaus überschreitet;
ein Schutzblech (3), das an seinen jeweiligen Enden einen Bogenvorsprung 31 aufweist;
**dadurch gekennzeichnet,**
**dass** bei der Zusammensetzung der U-Teil (22) an der Radachse befestigt ist, und dass der Bogenvorsprung (31) des Schutzblechs (3) in die Rastnut (14) der Rasteinrichtung (1) eingerastet ist und gegen die gebogene Vertiefung (141) gedrückt ist, sodass eine starke und lösbare Verbindung hergestellt ist, und dass die am Ende der Strebe (2) befindliche Einhak-Öse (21) durch die Schrägführung (111) in die Einstecknut (12) eingeführt ist und an den Rastvorsprung (11) angehakt ist, sodass das Schutzblech (3) und die Strebe (2) miteinander verbunden sind, und dass die Strebe bei äußerlicher Kraft von der Einstecknut (12) mittels der Gestaltung der abgerundeten Kante (112) des Rastvorsprungs (11) herausgeglitten werden kann, um die Blockierung der Strebe (2) in die Felge des Rads zu vermeiden.

2. Rasteinrichtung nach Anspruch 1,
**dadurch gekennzeichnet,**
**dass** eine Verstärkungsschraube (142) an geeigneter Stelle der Rastnut (14) der Rasteinrichtung (1) derart angeordnet ist, dass die Verstärkungsschraube (142) in den Rand des Schutzblechs (3) eindrehbar ist, wodurch die Verbindung zwischen der Rasteinrichtung (1) und dem Schutzblech (3) verstärkt ist.

3. Rasteinrichtung nach Anspruch 1,
**dadurch gekennzeichnet,**
**dass** das Schutzblech (3) an geeigneter Stelle eine Vielzahl von Verlängerungsstreben (32) aufweist, wobei das Ende der Verlängerungsstreben (32) als Einhak-Öse (321) wie die Einhak-Öse (21) am Ende der obenerwähnten Strebe ausgebildet ist, und dass die Rasteinrichtung (6) wie die Rasteinrichtung (1) am unteren Ende eine Einstecknut (63) aufweist, deren Seitenwand leer ausgehöhlt ist und als Rastvorsprung (64) ausgebildet ist, und dass der obere Teil der Rasteinrichtung (6) symmetrisch mit einer oberen Einstecknut (62) und einem Rastvorsprung (61) versehen ist, und dass bei der Zusammensetzung die am Ende der Verlängerungsstrebe (32) angeordnete Einhak-Öse (321) in die obere Einstecknut (62) eingesteckt wird, während die am Ende der Strebe (2) angeordnete Einhak-Öse (21) in die obere Einstecknut (63) eingesteckt wird, sodass das Schutzblech (3) und die Strebe (2) miteinander verbunden sind.

4. Rasteinrichtung nach Anspruch 3,
**dadurch gekennzeichnet,**
**dass** die obere Einstecknut (62) an ihren zwei Seiten jeweils eine nach außen verlängernde Expansionsstecköffnung (621) aufweist, wobei die am Schutzblech (3) angebrachte Verlängerungsstrebe (32) durch die Verbindungsleiste (33) ersetzt ist, die in die Expansionsstecköffnung (621) einsteckbar ist, und dass die Verbindungsleiste (33) an ihren Ende mit einer Verbindungsbohrung (332) versehen ist, die an den Rastvorsprung (61) innerhalb der oberen Einstecknut (62) der Rasteinrichtung (6) anhakbar ist.

5. Rasteinrichtung nach Anspruch 3,
**dadurch gekennzeichnet,**
**dass** die obere Einstecknut (72) und die Einstecknut (73) jeweils an entgegengesetzten Seiten angeordnet sind, während die Rastvorsprünge (71, 74) jeweils an den entgegengesetzten Seiten angebracht sind.

6. Rasteinrichtung nach Anspruch 1, 2, 3, 4 oder 5,
**dadurch gekennzeichnet,**
**dass** eine Befestigungseinrichtung (5) an der Stelle des U-Teils (22) der Strebe (2) angeordnet ist und aus einem Hauptkörper (51), einem Befestigungsdeckel (52) und einer Positionierschraube (53) besteht, und dass der Hauptkörper (51) eine Befestigungsbohrung (511), einen Justierschlitz (512) und eine Aufnahme (513) aufweist, wobei der an jeweiligen Seiten der Aufnahme (513) befindliche Vorsprungrand eine vertiefte Kante (514) in der Nähe der Befestigungsbohrung (511) besitzt, und wobei die Aufnahme (513) an ihrer Rückseite mit einer Nut zur Aufnahme einer Unterlegscheibe (531) versehen ist, und dass die Breite des Befestigungsdeckels (52) genau in der Aufnahme (513) paßt, wobei der Befestigungsdeckel (52) einen dem Justierschlitz (512) entsprechenden durchbohrenden Justierschlitz (521) aufweist, während der Befestigungsdeckel (52) an beiden Seiten seines Endes jeweils mit einem Fortsatz (522) versehen ist, und dass bei Zusammensetzen die Befestigungseinrichtung (5) mittels der Befestigungsbohrung (511) an der Radachse befestigt ist, wobei der U-Teil (22) der Strebe (2) in die Aufnahme (513) eingesteckt wird, woraufhin der Befestigungsdeckel 52 auf den U-Teil (22) derart aufgedeckt wird, dass die Fortsätze (522) gegen die jeweiligen vertieften Kanten (514) zur Befestigung gedrückt werden, woraufhin die Positionierschraube 53 durch die Justierschlitze (521, 512) durchgeht und genau neben dem U-Teil (22) angebracht ist und schließlich in dem Schraubloch der Unterlegscheibe (531) eingedreht wird, wodurch die Strebe (2) mit der Radachse verbunden ist, und dass der Abstand zwischen dem Strebenende und der Radachse einstellbar ist, indem die Positionierschraube (53) an unterschiedlicher Stelle der Justierschlitze (521, 512) befestigt sein kann, wodurch die Streben (2) unterschiedlicher Länge den Rädern unterschiedlichen Durchmessers passen.
